(19) Europäisches Patentamt
European Patent Office
Office européen des brevets

(11) Veröffentlichungsnummer : **0 118 394**
**B1**

(12) # EUROPÄISCHE PATENTSCHRIFT

(45) Veröffentlichungstag der Patentschrift : **15.04.87**

(51) Int. Cl.⁴ : **C 09 B 67/38**, D 06 P 1/16

(21) Anmeldenummer : **84810087.1**

(22) Anmeldetag : **22.02.84**

(54) **Dispersfarbstoffpräparate.**

(30) Priorität : **28.02.83 CH 1082/83**

(43) Veröffentlichungstag der Anmeldung : **12.09.84 Patentblatt 84/37**

(45) Bekanntmachung des Hinweises auf die Patenterteilung : **15.04.87 Patentblatt 87/16**

(84) Benannte Vertragsstaaten : **CH DE FR GB LI**

(56) Entgegenhaltungen :
**FR-A- 1 129 340**
**FR-A- 2 245 739**
**FR-A- 2 254 613**
**FR-A- 2 284 649**
**FR-A- 2 375 303**
**FR-A- 2 393 036**

(73) Patentinhaber : **CIBA-GEIGY AG**
**Klybeckstrasse 141**
**CH-4002 Basel (CH)**

(72) Erfinder : **Büchel, Urs, Dr.**
**Im Breitfeld 7**
**CH-4105 Biel-Benken (CH)**
Erfinder : **Muther, Paul**
**Matthäusstrasse 20**
**CH-4057 Basel (CH)**

**EP 0 118 394 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft feste, von anionischen Dispergatoren freie Dispersfarbstoffpräparate, ein Verfahren zu deren Herstellung, sowie deren Verwendung zur Herstellung organischer Druckpasten und Drucktinten.

Feste, pulverförmige Zubereitungen von Dispersfarbstoffen enthalten vielfach anionaktive Dispergatoren, wie Ligninsulfonate oder Formaldehydkondensate aromatischer Sulfonsäuren. Diese Zusätze sind bei der Verwendung derartiger Präparate zur Herstellung von Färbebädern im allgemeinen nicht von Nachteil, da sie die Dispersionsstabilität des Farbstoffs gerade bei höheren Temperaturen positiv beeinflussen. Solche Farbstoffpräparate sind jedoch ungeeignet zur Herstellung von organischen Drucktinten oder Druckpasten enthaltend synthetische Verdicker, da die Viskosität der synthetischen Verdicker je nach Menge der mit den Präparaten eingebrachten anionischen Dispergatoren rapide abnimmt, bis hin zu einer für den Druck völlig ungeeigneten dünnflüssigen Formulierung.

Ligninsulfonate und Formaldehydkondensate von aromatischen Sulfonsäuren sind zudem schlecht löslich in organischen Lösungsmitteln, wie sie üblicherweise zur Herstellung rein organischer Druckpasten und -tinten verwendet werden.

Aufgabe der vorliegenden Erfindung war es daher, von anionischen Dispergatoren freie Dispersfarbstoffpräparate herzustellen, die sich besonders zur Bereitung organischer, synthetische Verdicker enthaltender Druckpasten und Drucktinten eignen.

Gut verträglich mit synthetischen Verdickern sind nichtionische Dispergatoren, wie die in grosser Zahl zur Verfügung stehenden Aethylenoxid-Addukte oder auch Aethylenoxid-Propylenoxid-Blockpolymere. Dennoch musste der vollständige Ersatz anionischer Dispergatoren gegen nichtionische Dispergatoren problematisch erscheinen, da dies bedeutet, bereits bei der Mahlung des rohen Dispersfarbstoffes keine anionischen Dispergatoren zu verwenden. Es ist jedoch bekannt, dass während des Mahlvorganges durch mechanischen Druck zunächst Mikrorisse in den Kristallteilchen des Rohfarbstoffs entstehen. Damit diese feinsten Risse bei Nachlassen des Drucks nicht wieder verschwinden, sondern schliesslich zur Zerteilung der Farbstoffpartikel führen, wird allgemein in Gegenwart von ionischen Dispergatoren gemahlen. Die Dispergatoren dringen in die Risse ein und verringern aufgrund ihrer gleichsinnigen Ladung die mechanische Energie, die zur Zerteilung der Partikel erforderlich ist (siehe S. Heimann, Melliand *12*, 885 (1982). Nichtionische Dispergatoren haben zwar auch eine Affinität zu den Farbstoffteilchen und dringen in die während des Mahlvorganges entstehenden Mikrorisse ein, können jedoch wegen ihrer Ladungsfreiheit den Prozess der Zerteilung nicht so wirkungsvoll unterstützen.

Von den Dispergatoren ist aber nicht nur zu fordern, dass diese sich als Mahlhilfsmittel eignen, sie sollten zudem in den für die Druckfarbenherstellung verwendeten Medien, insbesondere in Alkydharzen, löslich sein, um so vor allem die Herstellung von wasserfreien Druckpasten bzw.-tinten zu ermöglichen.

Ueberraschenderweise wurde gefunden, dass nichtionische Dispergatoren aus der Gruppe der Fettalkoholäthoxylate mit einem Molgewicht von 800 bis 2 000, der Fettaminäthoxylate mit einem Molgewicht von 500 bis 1 000 und der Polyvinylpyrrolidone mit einem Molgewicht von 10 000 bis 25 000 diese Anforderungen erfüllen und sowohl als Mahlhilfsmittel, wie auch zur Einarbeitung in rein organische Druckpasten und Drucktinten geeignet sind.

Gegenstand der Erfindung sind somit feste, von anionischen Dispergatoren freie Dispersfarbstoffpräparate, enthaltend einen oder mehrere Dispersionsfarbstoffe mit einer Teilchengrösse von $< 5$ µm und einen oder mehrere nichtionische Dispergatoren aus der Gruppe der Fettalkoholäthoxylate MG 800 bis 2 000, der Fettaminäthoxylate MG 500 bis 1 000 und der Polyvinylpyrrolidone MG 10 000 bis 25 000.

Geeignete Farbstoffe zur Herstellung der erfindungsgemässen Zubereitungen sind Dispersionsfarbstoffe der verschiedensten Farbstoffklassen, vor allem Farbstoffe der Azo- und Anthrachinonreihe. Besonders bevorzugt sind Farbstoffe, die im Bereich von 160° bis 220°C sublimieren und die üblicherweise im Transferdruck verwendet werden.

Bei den Aethylenoxid-Addukten handelt es sich im einzelnen um folgende Verbindungstypen :

— Umsetzungsprodukte von gesättigten und/oder ungesättigten Fettalkoholen mit 10 bis 20 C-Atomen mit 15 bis 35 Mol Aethylenoxid je Mol Hydroxylgruppe.

— Umsetzungsprodukte von gesättigten und/oder ungesättigten Fettaminen mit 10 bis 20 C-Atomen mit 7 bis 18 Mol Aethylenoxid je Mol Aminogruppe.

Auch Gemische von Aethylenoxid-Addukten sind verwendbar. Derartige Gemische erhält man durch Mischen einzelner Aethoxylate oder direkt durch Umsetzung eines Gemisches aus Fettalkoholen und/oder Fettaminen mit Aethylenoxid.

Als gesättigte bzw. ungesättigte Fettalkohole kommen Dodecanol, Palmitylalkohol, Stearylalkohol, Oleylalkohol oder Talgfettalkohole in Betracht. Als Fettamine sind Stearylamin, Laurylamin, Palmitylamin und Oleylamin genannt.

Bei den Polyvinylpyrrolidonen kommen insbesondere solche in Frage, deren heterocyclische Reste durch verzweigte oder unverzweigte Alkylgruppen mit 2 bis 6 C-Atomen substituiert sind.

Die erfindungsgemässen Präparate enthalten die genannten nichtionischen Dispergatoren bevorzugt in einer Konzentration von 5 bis 20 Gew.%, insbesondere 8 bis 15 Gew.%, bezogen auf Farbstoff.

Als besonders geeignet haben sich die folgenden Dispergatoren erwiesen : Cetyl-Stearylalkoholäthoxylat mit einem Molgewicht von 1 000 bis 1 500, Laurylaminäthoxylat mit einem Molgewicht von 500 bis 800 und Alkyl-($C_2$-$C_6$)-polyvinylpyrrolidon mit einem Molgewicht von 13 000 bis 22 000.

Für die Herstellung von Drucktinten auf Alkydharzbasis, die z. B. vor allem im Transferdruck Verwendung finden, haben sich in erster Linie solche Präparate bewährt, die aus 80 bis 95 Gew.% Dispersfarbstoff mit einem Sublimationspunkt im Bereich von 160 bis 220 °C und 20 bis 5 Gew.% nichtionischem Dispergator bestehen und die praktisch frei sind von weiteren Zusätzen.

Die neuen Präparate werden erhalten, indem man den oder die Dispersionsfarbstoffe unter Zusatz von mindestens einem der genannten nichtionischen Dispergatoren homogen in Wasser verteilt und die so erhaltene Suspension so lange einem Mahlprozess unterwirft, bis die Primärteilchengrösse weniger als 5 µm beträgt. Anschliessend wird die feinteilige Dispersion in an sich bekannter Weise in eine trockene pulverige Form überführt.

Die Mahlung des Farbstoffs erfolgt in den üblichen Nasszerkleinerungsaggregaten, wie z. B. Rührwerkskugelmühlen oder Sandmühlen. Geeignete Trocknungsapparate sind der Sprühtrockner, Wirbelschichttrockner, Dünnschichtkontakttrockner, wie z. B. Walzentrockner und kontinuierlich arbeitende Schaufeltrockner ; vorteilhaft wird der Sprühtrockner eingesetzt, da dieser rasch dispergierbare Präparate liefert.

Bei der Trocknung wirken die genannten nichtionischen Dispergatoren einer Agglomeration der Farbstoffteilchen entgegen und verhindern ausserdem die Staubbildung bei Transport und Lagerung der Farbstoffpulver.

Die erfindungsgemässen Präparate eignen sich vorzüglich zur Herstellung von wasserfreien organischen Druckpasten und Drucktinten für den Textildruck, aber vor allem zum Bedrucken von Hilfsträgern für den Transferdruck. Gegenüber bekannten Zubereitungen, welche anionische Dispergatoren enthalten, zeichnen sich diese Präparate durch folgende Merkmale aus :

— einwandfreie Verträglichkeit mit synthetischen Verdickern, z. B. Alkydharzen, Polyacrylaten oder Mischpolymerisaten auf Vinylpyrrolidon oder Maleinsäurebasis,

— leichte Dispergierbarkeit sowie

— vollständige Löslichkeit des Dispergators in den für die Druckpasten/tintenherstellung verwendeten organischen Medien, wie z. B. Alkoholen.

Die nachfolgenden Beispiele dienen der Veranschaulichung der Erfindung ; Teile bedeuten Gewichtsteile und Prozente Gewichtsprozente.

Beispiel 1

450 Teile des trockenen Farbstoffes der Formel

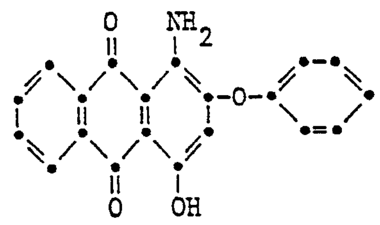

werden in 45 Teile Cetyl-Stearylalkohol, veräthert mit 25 Mol Aethylenoxid, und 400 Teile Wasser unter intensivem Rühren langsam eingetragen und während ca. 1 Stunde homogenisiert und entlüftet. Man erhält eine 50 %ige Farbstoffsuspension, die in einer offenen Mühle mittels 2 000 Teilen Siliquarzitkugeln (1 mm Ø) während ca. 15 Stunden gemahlen wird. Die Teilchengrösse am Ende der Nassmahlung ist kleiner als 5 µm. Die Dispersion wird nun von den Mahlkörpern abgetrennt, die anschliessend mit 105 Teilen Wasser nachgespült werden.

Die feinteilige Dispersion wird mittels eines Zerstäubungstrockners getrocknet. Man erhält ein freifliessendes, nichtstäubendes Farbstoffpulver, bestehend aus 90 % Farbstoff, 9 % Dispergator und 1 % Restfeuchte, das sich rasch in organischen Druckmedien auf Alkydharzbasis dispergieren lässt. Das Präparat erniedrigt nicht die Viskosität synthetischer Verdicker.

Beispiele 2 bis 4

Verfährt man wie im Beispiel 1 beschrieben und verwendet anstelle des dort genannten Farbstoffs gleiche Teile eines der folgenden Farbstoffe, so erhält man ebenfalls Präparate, die sich hervorragend zur Herstellung von organischen, synthetische Verdicker enthaltenden Druckpasten/tinten eignen.

(Siehe Formeln Seite 4 f.)

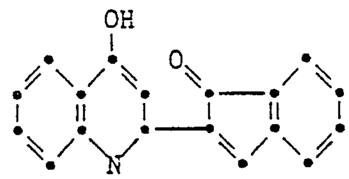

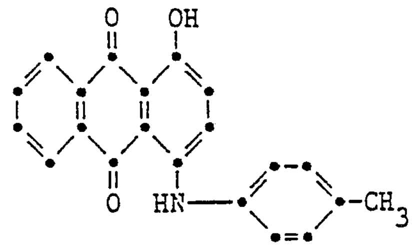

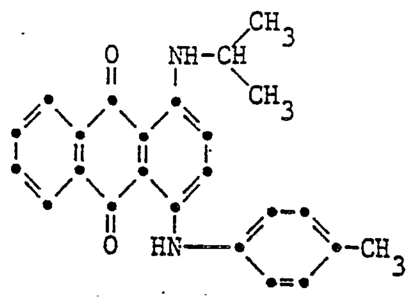

Beispiel 5

450 Teile des trockenen Farbstoffes der Formel

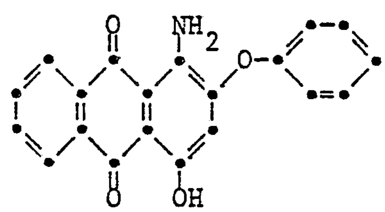

werden in 45 Teile Laurylaminäthoxylat, mit einem Molgewicht von 500 bis 800, und 400 Teile Wasser unter intensivem Rühren langsam eingetragen und während ca. 1 Stunde homogenisiert und entlüftet. Man erhält eine 50 %ige Farbstoffsuspension, die in einer offenen Mühle mittels 2 000 Teilen Siliquarzitkugeln (1 mm Ø) während ca. 15 Stunden gemahlen wird. Die Teilchengrösse am Ende der Nassmahlung ist kleiner als 5 µm. Die Dispersion wird nun von den Mahlkörpern abgetrennt, die anschliessend mit 105 Teilen Wasser nachgespült werden.

Die feinteilige Dispersion wird mittels eines Sprühtrockners getrocknet. Man erhält ein freifliessendes, nichtstäubendes Farbstoffpulver, bestehend aus 90 % Farbstoff, 9 % Dispergator und 1 % Restfeuchte, das sich rasch in organischen Druckmedien auf Alkydharzbasis dispergieren lässt.

Beispiel 6

Verfährt man wie im Beispiel 5 beschrieben, verwendet jedoch anstelle des dort genannten nichtionogenen Dispergators die gleiche Menge an Alkyl-($C_2$-$C_6$)-polyvinylpyrrolidon mit einem Molgewicht von 13 000 bis 22 000, so erhält man ebenfalls ein Farbstoffpräparat, das sich hervorragend zur Herstellung von organischen, synthetischen Verdicker enthaltenden Druckpasten/tinten eignet.

Beispiel 7 (Drucktinte)

In einem 100 ml Becherglas werden 30 g Alkydharzverdicker (Grinding Base 100-S, LAWTER CHEMICALS, Inc.) vorgelegt und 15 g Farbstoffpräparat gemäss Beispiel 1 und 3 g Trockenstoffpaste (SIGBA) eingetragen und das Gemisch zur homogenen Verteilung der Farbstoffteilchen 15 Minuten lang gerührt. Anschliessend wird die Mischung auf einem 3-Passagenwalzwerk (BÜHLER-3-Walzwerk, Typ SDY 200) bei 30 °C dispergiert. Man erhält so eine gebrauchsfertige Drucktinte.

Beispiel 8 (Transferdruck auf PES)

Die gemäss Beispiel 7 hergestellte Drucktinte wird mit einem Probedruckgerät (23 °C, 0,5 m/s und 590 N) ab Gummidruckwalze auf Transferotto-I-Papier (Transferpapier glatt ; 65 g/cm²) aufgetragen. Die Auftragsmenge beträgt 0,5 bis 2,5 g/m². Nach Trocknen des bedruckten Zwischenträgers wird mit diesem Polyestergewebe im Transferdruckverfahren bedruckt (Kontaktzeit : 30 Sekunden ; Temperatur 210 °C). Man erhält einen konturenscharfen brillanten roten Druck.

**Patentansprüche**

1. Feste, von anionischen Dispergatoren freie Dispersfarbstoffpräparate, enthaltend einen oder mehrere Dispersionsfarbstoffe mit einer Teilchengrösse von < 5 µm und einen oder mehrere nichtionische Dispergatoren aus der Gruppe der Fettalkoholäthoxylate MG 800 bis 2 000, der Fettaminäthoxylate MG 500 bis 1 000 und der Polyvinylpyrrolidone MG 10 000 bis 25 000.

2. Präparate gemäss Anspruch 1, dadurch gekennzeichnet, dass diese als Dispersionsfarbstoff einen solchen der Azo- oder Anthrachinonreihe enthalten, der im Bereich von 160° bis 220 °C sublimiert.

3. Präparate gemäss Anspruch 1, dadurch gekennzeichnet, dass diese den nichtionischen Dispergator in einer Menge von 5 bis 20 Gew.%, insbesondere 8 bis 15 Gew.%, bezogen auf Farbstoff, enthalten.

4. Präparate gemäss Anspruch 1, dadurch gekennzeichnet, dass diese als nichtionischen Dispergator ein Cetyl-Stearylalkoholäthoxylat MG 1 000 bis 1 500, ein Laurylaminäthoxylat MG 500 bis 800 und/oder ein Alkyl-($C_2$-$C_6$)-polyvinylpyrrolidon MG 13 000 bis 22 000 enthalten.

5. Präparate gemäss Anspruch 1, dadurch gekennzeichnet, dass diese aus 80 bis 95 Gew.%. Dispersfarbstoff, welcher in einem Bereich von 160 bis 220 °C sublimiert und 20 bis 5 Gew.% nichtionischem Dispergator bestehen.

6. Verfahren zur Herstellung der Präparate gemäss Anspruch 1, dadurch gekennzeichnet, dass man den oder die Dispersfarbstoffe unter Zusatz von mindestens einem der genannten nichtionischen Dispergatoren homogen in Wasser verteilt, auf eine Teilchengrösse von < 5 µm heruntermahlt und die feinteilige Dispersion trocknet, insbesondere sprühtrocknet.

7. Verwendung der Präparate gemäss Anspruch 1 zur Herstellung von organischen Druckpasten und Drucktinten, insbesondere von solchen für den Transferdruck.

**Claims**

1. A solid disperse dye formulation which does not contain anionic dispersants and which comprises one or more disperse dyes having a particle size of less than 5 µm, and one or more nonionic dispersants selected from the group of the fatty alcohol ethoxylates having a molecular weight in the range from 800 to 2 000, of the fatty amine ethoxylates having a molecular weight in the range from 500 to 1 000 and of the polyvinylpyrrolidones having a molecular weight in the range from 10 000 to 25 000.

2. A formulation according to claim 1, which contains a disperse dye of the azo or anthraquinone series which sublimes in the temperature range from 160° to 220 °C.

3. A formulation according to claim 1, which contains the nonionic dispersant in a concentration of 5 to 20 % by weight, preferably of 8 to 15 % by weight, based on dye.

4. A formulation according to claim 1, wherein the nonionic dispersant is a cetyl stearyl alcohol ethoxylate with a molecular weight of 1 000 to 1 500, a laurylamine ethoxylate with a molecular weight of 500 to 800 and/or a $C_2$-$C_6$ alkylpolyvinylpyrrolidone with a molecular weight of 13 000 to 22 000.

5. A formulation according to claim 1, which consists of 80 to 95 % by weight of a disperse dye which sublimes in the temperature range from 160° to 220 °C, and 20 to 5 % of a nonionic dispersant.

6. A process for the preparation of a formulation according to claim 1, which comprises homogeneously dispersing one or more disperse dyes in water by adding at least one nonionic dispersant of the indicated kind, grinding the dispersion to a particle size of less than 5 µm and then drying, in particular spray drying, the fine dispersion so obtained.

7. The use of a formulation according to claim 1 for preparing organic printing pastes and printing inks, in particular those for transfer printing.

**Revendications**

1. Formulations solides de colorants dispersés, exemptes de dispersants anioniques, contenant un ou plusieurs colorants dispersés présentant une dimension de particules inférieure à 5 µm, et un ou plusieurs dispersants non ioniques choisis parmi le groupe constitué des produits d'éthoxylation d'alcools gras de masse molaire 800 à 2 000, des produits d'éthoxylation d'amines grasses de masse molaire 500 à 1 000, et des polyvinylpyrrolidones de masse molaire 10 000 à 25 000.

2. Formulations conformes à la revendication 1, caractérisées en ce qu'elles contiennent, en tant que colorants dispersés, un colorant dispersé de la série azoïque ou de la série anthraquinonique, qui se sublime dans le domaine allant de 160 à 220 °C.

3. Formulations conformes à la revendication 1, caractérisées en ce qu'elles contiennent le dispersant non ionique en une quantité allant de 5 à 20 % en poids, en particulier de 8 à 15 % en poids, par rapport au colorant.

4. Formulations conformes à la revendication 1, caractérisées en ce qu'elles contiennent, en tant que dispersant non ionique, un produit d'éthoxylation de l'alcool cétylique-stéarylique de masse molaire 1 000 à 1 500, un produit d'éthoxylation de la laurylamine de masse molaire 500 à 800, et/ou une (alkyl en $C_{2-6}$)-polyvinylpyrrolidone de masse molaire 13 000 à 22 000.

5. Formulations conformes à la revendication 1, caractérisées en ce qu'elles sont constituées de 80 à 95 % en poids d'un colorant dispersé qui se sublime dans le domaine allant de 160 à 220 °C, et de 20 à 5 % en poids d'un dispersant non ionique.

6. Procédé de préparation des formulations conformes à la revendication 1, caractérisé en ce que l'on divise dans l'eau, jusqu'à homogénéité, le ou les colorants dispersés, tout en ajoutant au moins un des dispersants non ioniques mentionnés, on broie la dispersion jusqu'à une dimension de particules inférieure à 5 µm, et on sèche la dispersion finement divisée, en particulier par pulvérisation.

7. Utilisation des formulations conformes à la revendication 1 pour la préparation de pâtes d'impression et d'encres d'impression organiques, en particulier de celles pour l'impression-transfert.